# EUROPÄISCHE PATENTSCHRIFT

(11) **EP 2 057 032 B1**
(45) Veröffentlichungstag und Bekanntmachung des Hinweises auf die Patenterteilung: **16.10.2013**
(21) Anmeldenummer: 08715824.2
(22) Anmeldetag: 18.02.2008
(51) Int. Cl.: B60N 2/07, B60N 2/18, B60N 2/22, B60N 2/42, B60N 2/50

(54) **FAHRZEUGSITZ, INSBESONDERE NUTZFAHRZEUGSITZ**
VEHICLE SEAT, IN PARTICULAR COMMERCIAL VEHICLE SEAT
SIÈGE DE VÉHICULE, EN PARTICULIER SIÈGE DE VÉHICULE UTILITAIRE

(30) Priorität: 21.02.2007 DE 102007009170
(43) Veröffentlichungstag der Anmeldung: 13.05.2009
(73) Patentinhaber: KEIPER GmbH & Co. KG, 67657 Kaiserslautern (DE)
(72) Erfinder: WEBER, Thomas, 67659 Kaiserslautern (DE); NIEROBA, Christof, 67663 Kaiserslautern (DE); SCHWEIZER, Thorsten, 66955 Pirmasens (DE); NISSEN, Rüdiger, 66629 Freisen (DE); GUNDALL, Thomas, 66851 Queidersbach (DE)
(74) Vertreter: Kalkoff & Partner
(86) Internationale Anmeldenummer: PCT/EP2008/001224
(87) Internationale Veröffentlichungsnummer: WO 2008/101644

(56) Entgegenhaltungen:
- WO-A-2006/032975
- FR-A- 2 433 433
- JP-A- 56 131 432
- US-A- 6 030 043
- US-B1- 6 276 650

## Beschreibung

Die Erfindung betrifft einen Fahrzeugsitz, insbesondere Nutzfahrzeugsitz, mit den Merkmalen des Oberbegriffs des Anspruches 1.

Bekannte Fahrzeugsitze mit Scherengestell werden in der Regel für Nutzfahrzeuge eingesetzt. Während in einer einfachen Ausführung der Sitzrahmen ein Bestandteil des Scherengestells ist oder fest mit diesem verbunden ist, kann zur Erhöhung des Sitzkomfort der Sitzrahmen, relativ zum Scherengestell neigungseinstellbar sein, beispielsweise indem der Sitzrahmen am Scherengestell angelenkt ist und ein Lineareinsteller oder ein Getriebe den Sitzrahmen relativ zum Scherengestell schwenkt. Ein so verbesserter Fahrzeugsitz ist aus der DE 32 43 747 C2 bekannt.

Die WO 2006/032975 A1 offenbart einen Fahrzeugsitz der eingangs genannten Art. Das Dreigelenk zur Neigungseinstellung ist zwischen dem Sitzrahmen und einem Schlitten vorgesehen, welcher wiederum am Sitzrahmen angelenkt ist und mittels einer Schiene relativ zum Scherengestell beweglich ist. Mittels einer Stellschraube ist das Dreigelenk einstellbar.

Der Erfindung liegt die Aufgabe zu Grunde, einen Fahrzeugsitz der eingangs genannten Art weiter zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem der Sitzrahmen einerseits direkt am Scherengestell angelenkt ist und andererseits mittels wenigstens eines Dreigelenks mit dem Scherengestell gelenkig verbunden ist, steht eine einfach aufgebaute Neigungseinstellung zur Verfügung, welche durch Antrieb des Dreigelenks erfolgt. Der Antrieb erfolgt unter Verwendung einer herkömmlichen Antriebsvorrichtung, nämlich eines Neigungseinstellbeschlag, der im Dreigelenk neben einem gelenkig mit dem Neigungseinstellbeschlag verbundenen Lenker vorgeschen ist.

Bei dem Neigungseinstellbeschlag kann es sich um einen Rastbeschlag oder Getriebebeschlag handeln, wie er an sich zur Einstellung der Lehnenneigung bekannt ist. Dies verringert die Kosten. Es sind dabei Ausführungen mit scheibenförmigen Einheilten und solche mit radial abstehenden Befestigungslaschen möglich.

Auf der dem Neigungseinstellbeschlag gegenüberliegenden Fahrzeugsitzseite kann ein mit einer durch den Neigungseinstellbeschlag definieren Neigungseinstellachse fluchtendes erstes Gelenk sowie ein weiterer Lenker vorgesehen sein. Dies verringert die Anzahl der Bauteile und ebenfalls die Kosten.

Die Neigungseinstellachse und die beiden Gelenke des Lenkers definieren das Dreigelenk. Die Geometrie des Dreigelenks ist vorzugsweise hinsichtlich der auftretenden Momente optimiert. So hat beispielsweise ein axialer Versatz zwischen den Schwenkebenen der Gelenke, beispielsweise Neigungseinstellbeschlag bzw. Hebel einerseits und Lenker andererseits, wenn beispielsweise zwischen Neigungseinstellbeschlag bzw. Hebel auf den beiden Fahrzeugsitzseiten eine Quertraverse vorgesehen ist, den Vorteil, dass keine Biegemomente auf eine solche Quertraverse ausgeübt werden.

Vorzugsweise weist das Scherengestell ein erstes Fangelement und der Sitzrahmen ein zweites Fangelement auf, welche im Normalfall ohne Zusammenwirkung sind und in einem Crashfall oder Missbrauchsfall aufgrund eines Drehmomentes, welches mittels der Lehne am Sitzrahmen angrein, einander nähern und dann zusammenwirken, insbesondere in Anlage aneinander geraten, unter Schaffung eines weiteren Weges für den Kraftfluss, werden die Kräfte nicht nur über die Ablenkstelle des Sitzrahmens am Scherengestell und den Lineareinsteller oder das Getriebe geleitet, sondern parallel dazu über die Fangelemente. Damit erfolgt eine bessere Lastübertragung vom Sitzrahmen an das Scherengestell und/oder den Unterbau, was eine geringere Dimensionierung der im Kraftflusses parallel zu den Fangelementen liegenden Bauteile erlaubt und dadurch insgesamt die Herstellungskosten und das Gewicht verringert. Dieser Vorteil wird vorzugsweise dadurch verstärkt, dass die Fangelemente die Abstützlänge vergrößern, indem die Fangelemente beabstandet von der Anlenkstelle vorgeschen sind, bei einem mittig angelenkten Sitzrahmen beispielsweise am Ende desselben. In einfach herzustellenden Ausführungen sind die Fangelemente als Anschlagwinkel, Zähne, Haken, Bolzen, Berandungen von Öffnungen oder dergleichen ausgebildet.

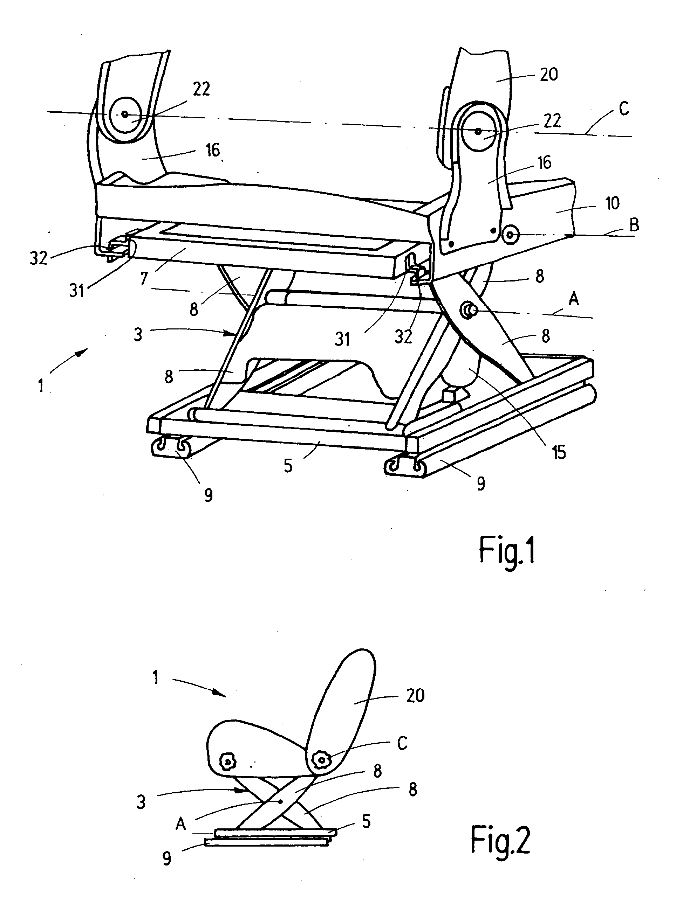

Im folgenden ist die Erfindung anhand zweier in der Zeichnung dargestellten Ausführungsbeispiele näher erläutert. Es zeigen
- Fig. 1: eine beiden Ausführungsbeispielen gemeinsame perspektivische Teilansicht ohne Polsterung,
- Fig. 2: eine beiden Ausführungsbeispielen gemeinsame, schematische Seitenansicht,

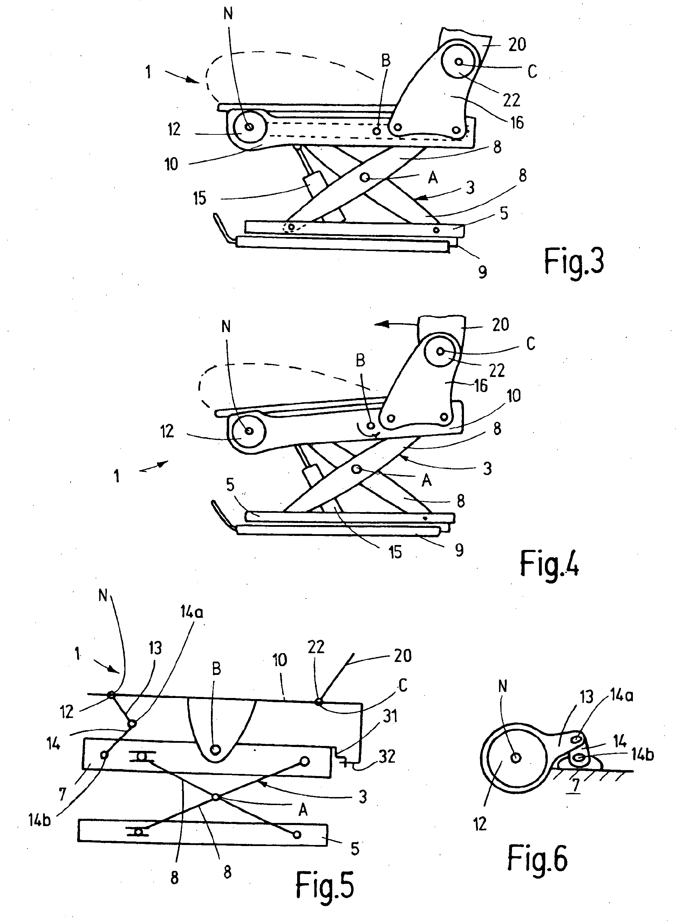

- Fig. 3: eine beiden Ausführungsbeispielen gemeinsame Seitenansicht in einem Normalfall bei einem Neigungswinkel von 0° zwischen Sitzrahmen und Scherengestell,
- Fig. 4: eine Fig. 3 entsprechende Seitenansicht in einem Crashfall,
- Fig. 5: eine beiden Ausführungsbeispielen gemeinsame, schematische Darstellung aller Gelenke,
- Fig. 6: eine schematische Darstellung des Dreigelenks,
- Fig. 7: eine perspektivische Teilansicht des ersten Ausführungsbeispiels auf der Fahrzeugsitzseite mit Neigungseinstellbeschlag,
- Fig. 8: eine perspektivische Teilansicht des ersten Ausführungsbeispiels auf der gegenüberliegenden Fahrzeugsitzseite,
- Fig. 9: eine perspektivische Teilansicht des zweiten Ausführungsbeispiels auf der Fahrzeugsitzseite mit Neigungseinstellbeschlag, und
- Fig. 10: eine perspektivische Teilansicht des zweiten Ausführungsbeispiels auf der gegenüberliegenden Fahrzeugsitzseite.

Ein Fahrzeugsitz 1 für ein Nutzfahrzeug oder ein anderes Kraftfahrzeug weist ein Scherengestell 3 auf, welches einen Unterrahmen 5, einen oberhalb desselben angeordneten Oberrrahmen 7 und beidseitig je ein Paar gekreuzter Schwingen 8 umfasst. Eine Scherenachse A verbindet die beiden Kreuzungspunkte und definiert zugleich die Achse, um welche die Schwingen 8 relativ zueinander schwenken können. Die Schwingen 8 sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung beweglich geführt sind. Durch diese Bewegung der Schwingen 8 wird die Höhe des Oberrahmens 7 über dem Unterrahmen 5 eingestellt. Das Scherengestell 3 ist vorliegend mittels Sitzschienen 9 in Sitzlängsrichtung verschiebbar, womit der Fahrzeugsitz 1 längseinstellbar ist, d.h. seine Sitzlängsposition einstellbar ist.

Der Fahrzeugsitz 1 weist ferner einen Sitzrahmen 10 auf, welcher - um eine horizontale Sitzrahmen-Schwenkachse B relativ zum Scherengestell 3 schwenkbar - am Oberrahmen 7 beidseitig angelenkt ist. Vorliegend ist diese Sitzrahmen-Schwenkachse B - in Sitzlängsrichtung gesehen - etwas hinter der Mitte des Sitzrahmens 10 angeordnet. Am vorderen Ende des Sitzrahmens 10 ist auf einer Fahrzeugsitzseite ein erstes Gelenk 11 und auf der gegenüberliegenden Fahrzeugsitzseite damit fluchtend ein Neigungseinstellbeschlag 12 vorgesehen. Alternativ sind auf beiden Fahrzeugsitzseiten Neigungseinstellbeschläge 12 gleicher Bauart vorgesehen. Der Neigungseinstellbeschlag 12 weist zwei relativ zueinander verdrehbare Beschlagteile 12a und 12b auf, wodurch eine Neigungseinstellachse N definiert wird (welche mit dem ersten Gelenk 11 fluchtet). Die beiden Beschlagteile 12a und 12b sind miteinander verriegelbar (Rastbeschlag), wie beispielsweise in der WO 00/44582 A1 beschrieben, oder stehen miteinander in Getriebeverbindung (Getriebebeschlag), beispielsweise mittels eines selbsthemmenden Exzenterumlaufgetriebes, wie beispielsweise in der DE 44 36101 A1 beschrieben.

Derartige Neigungseinstellbeschläge 12 sind an sich für die Einstellung der Lehnenneigung bekannt.

Das erste Beschlagteil 12a des Neigungseinstellbeschlags 12 ist fest mit dem Sitzrahmen 10 verbunden, während am zweiten Beschlagteil 12b ein erster Hebel 13 befestigt (oder alternativ angeformt) ist. Mit dem ersten Hebel 13 ist in einer später genauer beschriebener Weise ein Lenker 14 gelenkig verbunden, der hierfür an seinem einen Ende ein zweites Gelenk 14a aufweist. Der Lenker 14 ist mit seinem anderen Ende mittels eines dritten Gelenks 14b am Oberrahmen 7 angelenkt. Dadurch definieren die Neigungseinstellachse N und der Lenker 14 mit seinen beiden Anlenkstellen 14a und 14b ein Dreigelenk.

Auf der anderen Fahrzeugsitzseite ist ein zweiter Hebel 13b vorgesehen, welcher, sofern wie vorliegend ein mit dem Neigungseinstellbeschlag 12 fluchtendes erstes Gelenk 11 vorgesehen ist, in seinen Abmessungen in Umfangs- und radialer Richtung (bezüglich des ersten Gelenks 11) dem zweiten Beschlagteil 12b samt erstem Hebel 13 entspricht. In der alternativen Ausführung mit einem weiterer Neigungseinstellbeschlag 12 auf der anderen Fahrzeugsitzseite ist der zweite Hebel 13b gleich wie oder spiegelbildlich zum ersten Hebel 13 ausgebildet. Ein weiterer Lenker 14 gleicher Bauart, d.h. gleicher oder spiegelbildlicher Ausbildung, ist einerseits mittels zweitem Gelenk 14a am zweiten Hebel 13b und anderseits mittels drittem Gelenk 14b am Oberrahmen 7 angelenkt. In allen Fällen ist somit beidseitig ein Dreigelenk zwischen Sitzrahmen 10 und Oberrahmen 7 vorgesehen.

Mittels des oder der Neigungseinstellbeschläge 12 und der Dreigelenke ist die Neigung des Sitzrahmens 10 relativ zum Oberrahmen 7 und damit zum Scherengestell 3 einstellbar. Der Antriebs des oder der Neigungseinstellbeschläge 12 erfolgt in an sich bekannter Weise manuell oder motorisch. Der Sitzrahmen 10 trägt in an sich bekannter Weise ein Sitzschale mit einem Sitzpolster. Mittels einer Feder 15, vorzugsweise einer Gasfeder, und vorzugsweise einem Dämpfer wird das Scherengestell 3 ein schwingfähiges System, welches den Sitzkomfort erhöht.

Am Sitzrahmen 10 (oder alternativ am Scherengestell 3, insbesondere am Oberrahmen 7 desselben) ist am hinteren Ende beidseitig je ein Lehnenadapter 16 befestigt. Eine Lehne 20 ist mittels beidseitig vorgesehenen Lehnenbeschlägen 22 an den Lehnenadaptem 16 um eine Lehnen-Schwenkachse C schwenkbar angebracht. Die Lehne 20 kann in abgewandelter Ausführung mittels der Lehnenschläge 22 direkt am Sitzrahmen 10 (oder alternativ am Scherengestell 3, insbesondere am Oberrahmen 7 desselben) um die Lehnen-Schwenkachse C schwenkbar angebracht sein. Der Antrieb der Lehnenschläge 22 erfolgt manuell oder motorisch. In einer weiteren Abwandlung ist nur auf einer Fahrzeugsitzseite ein Lehnenbeschlag 22 und auf der anderen Fahrzeugsitzseite ein Gelenk vorgesehen.

Die Lehnenbeschläge 22 können wie die Neigungseinstellbeschläge 12 als Rastbeschläge oder Getriebebeschläge, vorzugsweise mit einem selbsthemmenden Exzenterumlaufgetriebe, ausgebildet sein und in baulicher Hinsicht vorzugsweise eine scheibenförmige Einheit bilden. Die Lehne 20 ist mittels der Lehnenbeschläge 22 relativ zum Sitzrahmen 10 schwenkbar und in ihrer Neigung einstellbar. Die Lehne 20 ist in an sich bekannter Weise gepolstert.

Am hinteren Ende des Oberrahmens 7 ist - vorliegend jeweils auf beiden Fahrzeugsitzseiten - ein erstes Fangelement 31 vorgesehen, während am hinteren Ende des Sitzrahmens 10 zum Zusammenwirken mit jedem vorgesehenen ersten Fangelement 31 jeweils ein zweites Fangelement 32 vorgesehen ist. Die Fangelemente 31 und 32 sind von der Anlenkstelle des Sitzrahmens 10 am Oberrahmen 7 beabstandet. Die beiden Fangelemente 31 und 32 auf jeder Fahrzeugsitzseite sind so angeordnet, dass sie im Normalfall nicht zusammenwirken. Jedoch ist ein Anschnäbeln oder dergleichen möglich. Im Falle eines Frontcrashs oder starken Missbrauchs, wenn an der Lehne 20 eine Kraft nach vorne angreift, greift mittels der Lehne 20 ein im Sinne einer Schwenkbewegung nach vorne wirkendes Drehmoment um die Sitzrahmen-Schwenkachse B an dem an der Lehne 20 angebrachten Sitzrahmen 10 an. Dadurch bewegt sich der am Oberrahmen 7 an der Sitzrahmen-Schwenkachse B angelenkte Sitzrahmen 10 tendenziell an seinem vorderen Ende nach unten und an seinem hinteren Ende nach oben. Dadurch nähert sich das zweite Fangelement 32 dem ersten Fangelement 31 und kommt - vorliegend bei etwa 4° gegenüber der Horizontalen nach unten - in Anlage an das erste Fangelement 31, d.h. die beiden Fangelemente 31 und 32 wirken im Crashfall oder dergleichen zusammen. Durch dieses Zusammenwirken und den weiteren Weg für den Kraftfluss erfolgt eine bessere Lastübertragung vom Sitzrahmen 10 an das Scherengestell 3.

Insoweit stimmen beide Ausführungsbeispiele überein.

Wie bereits erwähnt, werden für die Dreigelenke Neigungseinstellbeschläge 12 verwendet, wie sie für die Einstellung der Lehnenneigung bekannt sind. Ein solcher Neigungseinstellbeschlag 12 kann daher an den Beschlagteilen 12a und 12b radial abstehende, angeformte Befestigungslaschen (und Halteklammern für den axialen Zusammenhalt der Beschlagteile 12a und 12b) aufweisen, was als erstes Ausführungsbeispiel beschrieben ist, oder in baulicher Hinsicht eine scheibenförmige Einheit bilden (und einen Umklammerungsring für den axialen Zusammenhalt aufweisen), was als zweites Ausführungsbeispiel beschrieben ist. Zur Vereinfachung der Logistik sind vorzugsweise bei jedem Ausführungsbeispiel die Lehnenbeschläge 22 und die Neigungseinstellbeschläge 12 vom gleichen Typ.

Im ersten Ausführungsbeispiel ist auf der einen Fahrzeugsitzseite an dem ersten Hebel 13, der vorzugsweise durch die Befestigungslaschen am zweiten Beschlagteil 12b und der zugeordneten Halteklammer gebildet ist, eine Quertraverse 40 befestigt (gegebenenfalls mittels eines weiteren Adapters), vorzugsweise verschweißt. Die Quertraverse 40, beispielsweise ein Rohr, ist parallel zur Sitzrahmen-Schwenkachse B angeordnet und verläuft zur anderen Fahrzeugsitzseite. Axial versetzt zum ersten Hebel 13 ist an der Quertraverse 40 der Lenker 14 mittels des zweiten Gelenks 14a angelenkt. Die Achse des Neigungseinstellbeschlags 12, das zweite Gelenk 14a und die Quertraverse 40 markieren dabei die Ecken eines Dreiecks, dessen Geometrie hinsichtlich der Antriebsmomente im Dreigelenk optimiert ist.

Auf der anderen, das erste Gelenk 11 aufweisenden Fahrzeugsitzseite ist der zweite Hebel 13b vorgesehen, der einerseits mittels des ersten Gelenks 11 am Sitzrahmen 10 angelenkt ist und andererseits ebenfalls an der Quertraverse 40 befestigt ist, vorzugsweise angeschweißt. Der erste Hebel 13, der zweite Hebel 13b und die Quertraverse 40 bilden somit eine feste Baueinheit. Auch auf der das erste Gelenk 11 aufweisenden Fahrzeugsitzseite ist der Lenker 14 axial versetzt zum zweiten Hebel 13b mittels des zweiten Gelenks 14a an der Quertraverse 40, also an der besagten Baueinheit, angelenkt. Beide Lenker 14 sind mittels jeweils des dritten Gelenks 14b am Oberrahmen 7 angelenkt, genauer gesagt an einem - vorzugsweise leicht schräg abstehenden - Oberrahmen-Adapter 7a des Oberrahmens 7.

Zur Optimierung der Geometrie des Dreigelenks zählt der axiale Versatz zwischen dem ersten Hebel 13 bzw. zweiten Hebel 13b einerseits und dem Lenker 14, d.h. der jeweiligen Schwenkebenen, entlang der Quertraverse 40 (d.h. axial bezüglich der Neigungseinstellachse N), der sich als axialer Versatz zwischen zwischen dem Beschlag 12 bzw. dem ersten Gelenk 11 einerseits und dem zweiten Gelenk 14a) darstellt. Dieser axiale Versatz hat den Vorteil, dass keine Biegemomente auf die Quertraverse 40 ausgeübt werden.

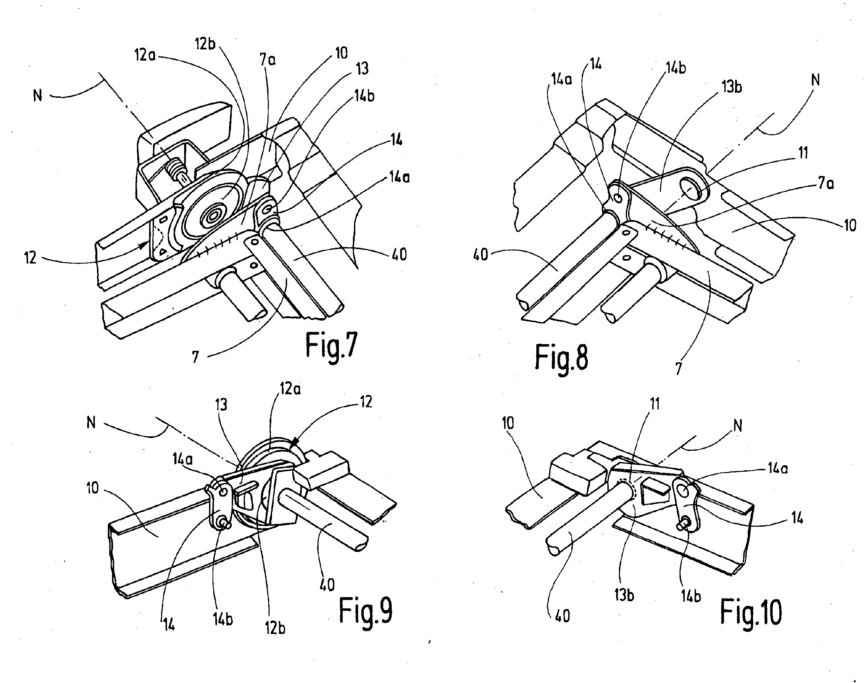

Im zweiten Ausführungsbeispiel ist auf der einen Fahrzeugsitzseite der erste Hebel 13 am zweiten Beschlagteil 12b befestigt, beispielsweise an axial abstehenden Schweißwarzen. Die Quertraverse 40 ist - mit der Neigungseinstellachse N fluchtend - am zweiten Beschlagteil 12b befestigt, beispielsweise mittels eines Adapters an den axial abstehenden Schweißwarzen, gegebenenfalls zusätzlich (oder alternativ) am ersten Hebel 13. Auf der anderen Seite ist die Quertraverse 40 mittels des ersten Gelenks 11 im Sitzrahmen 10 drehbar gelagert. Der zweite Hebel 13b ist an der Quertraverse 40 befestigt und entspricht in seinen Abmessungen und weitgehend in seiner Ausgestaltung dem ersten Hebel 13. Somit bilden das zweite Beschlagteil 12b, der erste Hebel 13, der zweite Hebel 13b und die Quertraverse 40 eine feste Baueinheit. Die Lenker 14 sind jeweils mittels des zweiten Gelenks 14a direkt am ersten Hebel 13 bzw. zweiten Hebel 13b angelenkt, während sie mittels des dritten Gelenks 14b an dem (in Fig. 9 und 10 nicht dargestellten) Oberrahmen 7 angelenkt sind.

### Bezugszeichenliste

- 1: Fahrzeugsitz
- 3: Scherengestell
- 5: Unterrahmen
- 7: Oberrahmen
- 7a: Oberrahmen-Adapter
- 8: Schwinge
- 9: Sitzschiene
- 10: Sitzrahmen
- 11: erstes Gelenk
- 12: Neigungseinstellbeschlag
- 12a: erstes Beschlagteil
- 12b: zweites Beschlagteil
- 13: erster Hebel
- 13b: zweiter Hebel
- 14: Lenker
- 14a: zweites Gelenk
- 14b: drittes Gelenk
- 15: Feder
- 16: Lehnenadapter
- 20: Lehne
- 22: Lehnenbeschlag
- 31: erstes Fangelement
- 32: zweites Fangelement
- 40: Quertraverse
- A: Scherenachse
- B: Sitzrahmen-Schwenkachse
- C: Lehnen-Schwenkachse
- N: Neigungseinstellachse

## Patentansprüche

1. Fahrzeugsitz, insbesondere Nutzfahrzeugsitz, mit einem Scherengestell (3), einem daran mit einer Schwenkachse (B) angelenkten Sitzrahmen (10), welcher einerseits direkt am Scherengestell (3) angelenkt ist und andererseits mittels wenigstens eines Dreigelenks mit dem Scherengestell (3) gelenkig verbunden ist und welcher relativ zum Scherengestell (3) in seiner Neigung einstellbar ist, und einer Lehne (20), welche am Sitzrahmen (10) oder am Scherengestell (3) angebracht ist, **dadurch gekennzeichnet, dass** im Dreigelenk wenigstens ein Neigungseinstellbeschlag (12) vorgesehen ist, welcher - zwei relativ zueinander verdrehbare Beschlagteile (12a, 12b) aufweisend - eine Neigungseinstellachse (N) definiert und welcher zwischen einerseits dem Sitzrahmen (10) und andererseits einem Lenker (14) des Dreigelenks wirksam ist, indem das erste Beschlagteil (12a) fest mit dem Sitzrahmen (10) verbunden ist, während am zweiten Beschlagteil (12b) ein erster Hebel (13) befestigt ist, mit welchem der Lenker (14) mittels eines zweiten Gelenks (14a) gelenkig verbunden ist, insbesondere direkt angelenkt oder bezüglich der Neigungseinstellachse (N) axial versetzt zum ersten Hebel (13) angeordnet ist, wobei der Lenker (14) mittels eines dritten Gelenks (14b) am Scherengestell (3) angelenkt ist, und wobei die Neigungseinstellachse (N) und die Gelenke (14a, 14b) des Lenkers (14) das Dreigelenk definieren.

2. Fahrzeugsitz nach Anspruch 1, **dadurch gekennzeichnet, dass** auf der dem Neigungseinstellbeschlag (12) gegenüberliegenden Fahrzeugsitzseite ein mit der Neigungseinstellachse (N) fluchtendes erstes Gelenk (11) vorgesehen ist.

3. Fahrzeugsitz nach Anspruch 2, **dadurch gekennzeichnet, dass** mittels des ersten Gelenks (11) ein zweiter Hebel (13b) angelenkt ist, mit welchem ein weiterer Lenker (14) mittels eines weiteren zweiten Gelenks (14a) gelenkig verbunden ist, insbesondere direkt angelenkt oder bezüglich der Neigungseinstellachse (N) axial versetzt zum zweiten Hebel (13b) angeordnet ist.

4. Fahrzeugsitz nach Anspruch 3, **dadurch gekennzeichnet, dass** zwischen dem Beschlagteil (12b) des Neigungseinstellbeschlags (12) oder dem ersten Hebel (13) einerseits und dem zweiten Hebel (13b) andererseits eine Quertraverse (40) vorgesehen ist, welche parallel zur Neigungseinstellachse (N) oder mit dieser fluchtend angeordnet ist, welche vorzugsweise mit den besagten Bauteilen (12b, 13, 13b) fest verbunden ist und welche vorzugsweise mit dem axial versetzten zweiten Gelenk (14a) versehen ist.

5. Fahrzeugsitz nach einem der vorhergehenden Ansprüche, **dadurch gekennzeichnet, dass** die Lehne (20) mittels wenigstens eines Lehnenbeschlags (22) am Sitzrahmen (10) oder am Scherengestell (3) oder an am Sitzrahmen (10) oder am Scherengestell (3) befestigten Lehnenadaptern (16) schwenkbar angebracht ist.

6. Fahrzeugsitz nach einem der vorhergehenden Ansprüche, **dadurch gekennzeichnet, dass** der Neigungseinstellbeschlag (12) und/oder der Lehnenbeschlag (22) in baulicher Hinsicht eine scheibenförmige Einheit bilden oder mit radial abstehenden Befestigungslaschen versehen sind und/oder dass der Neigungseinstellbeschlag (12) und/oder der Lehnenbeschlag (22) als Rastbeschlag oder als Getriebebeschlag, insbesondere mit einem selbsthemmenden Exzenterumlaufgetriebe, ausgebildet sind.

7. Fahrzeugsitz nach einem der vorhergehenden Ansprüche, **dadurch gekennzeichnet, dass** das Scherengestell einen Unterrahmen (5), einen oberhalb davon angeordneten Oberrahmen (7) und wenigstens ein Paar gekreuzter Schwingen (8) aufweist, mittels welcher die Höhe des Oberrahmen (7) über dem Unterrrahmen (5) einstellbar ist.

8. Fahrzeugsitz nach einem der vorhergehenden Ansprüche, **dadurch gekennzeichnet, dass** das Scherengestell (3) ein erstes Fangelement (31) und der Sitzrahmen (10) ein zweites Fangelement (32) aufweist, welche im Normalfall ohne Zusammenwirkung sind und in einem Crashfall oder Missbrauchsfall aufgrund eines Drehmomentes, welches mittels der Lehne (20) am Sitzrahmen (10) angreift, einander nähern und dann zusammenwirken unter Schaffung eines weiteren Weges für den Kraftfluss.

## Claims

1. A vehicle seat, in particular a commercial vehicle seat, with a scissor frame (3), a seat frame (10) articulated on it with a rotation axis (B), which is articulated directly on the scissor frame (3) on one side and is hinged with the scissor frame (3) by means of at least one triple joint on the other side and the incline of which is adjustable relative to the scissor frame (3), and a backrest (20), which is attached to the seat frame (10) or to the scissor frame (3), **characterized in that**, in the triple joint, at least one incline adjustment fitting (12) is provided, which has two fitting parts (12a, 12b) rotatable relative to each other and defines an incline adjustment axis (N) and which is effective between the seat frame (10) on one side and a control lever (14) of the triple joint on the other side, **in that** the first fitting part (12a) is permanently connected with the seat frame (10), while a first lever (13) is fastened on the second fitting part (12b), with which the control lever (14) is hinged by means of a second joint (14a), in particular directly articulated or arranged axially offset to the first lever (13) with respect to the incline adjustment axis (N), wherein the control lever (14) is articulated on the scissor frame (3) by means of a third joint (14b), and wherein the incline adjustment axis (N) and the joints (14a, 14b) of the control lever (14) define the triple joint.

2. The vehicle seat according to claim 1, **characterized in that** a first joint (11) that is flush with the incline adjustment axis (N) is provided on the vehicle seat side located opposite the incline adjustment fitting (12).

3. The vehicle seat according to claim 2, **characterized in that** a second lever (13b) is articulated by means of the first joint (11), with which an additional control lever (14) is hinged, in particular directly articulated, by means of an additional second joint (14a), or is arranged in an axially offset manner to the second lever (13b) with respect to the incline adjustment axis (N).

4. The vehicle seat according to claim 3, **characterized in that** a traverse member (40) is provided between the fitting part (12b) of the incline adjustment fitting (12) or the first lever (13) on one side and the second lever (13b) on the other side, which is arranged parallel to the incline adjustment axis (N) or flush with it, which is preferably permanently connected with said components (12b, 13, 13b) and which is preferably provided with the axially offset second joint (14a).

5. The vehicle seat according to one of the preceding claims, **characterized in that** the backrest (20) is pivoted on the seat frame (10) or on the scissor frame (3) or on the backrest adapters (16) fastened on the seat frame (10) or on the scissor frame (3) by means of at least one backrest fitting (22).

6. The vehicle seat according to one of the preceding claims, **characterized in that** the incline adjustment fitting (12) and/or the backrest fitting (22) form a disk-shaped unit from a structural point of view or are provided with radially projecting fastening straps and/or that the incline adjustment fitting (12) and/or the backrest fitting (22) are designed as an adjustable fitting or as a gearbox fitting, in particular with a self-locking eccentric planetary gear.

7. The vehicle seat according to one of the preceding claims, **characterized in that** the scissor frame has a bottom frame (5), a top frame (7) arranged above it and at least one pair of crossed rockers (8), by means of which the height of the top frame (7) above the bottom frame (5) is adjustable.

8. The vehicle seat according to one of the preceding claims, **characterized in that** the scissor frame (3) has a first catch element (31) and the seat frame (10) a second catch element (32), which normally do not interact, and approach each other in the event of a crash or misuse due to a torque, which engages by means of the backrest (20) on the seat frame (10) and then interact under creation of another path for the power flow.

## Revendications

1. Siège de véhicule, en particulier siège de véhicule utilitaire, avec un châssis en ciseaux (3), un cadre de siège (10) qui y est articulé avec un axe de pivotement (B) et qui est sur un côté articulé directement sur le châssis en ciseaux (3) et qui est sur autre côté raccordé de façon articulée au châssis en ciseaux (3) au moyen d'au moins une triple articulation et dont l'inclinaison par rapport au châssis en ciseaux (3) est réglable, et avec un dossier (20) qui est mis en place sur le cadre de siège (10) ou sur le châssis en ciseaux (3), **caractérisé en ce que**, dans la triple articulation, il est prévu au moins une ferrure de réglage d'inclinaison (12) qui - présentant deux parties de ferrure (12a, 12b) pouvant tourner l'une par rapport à l'autre - définit un axe de réglage d'inclinaison (N) et qui est active entre le cadre de siège (10) sur un côté et sur autre côté une bielle (14) de la triple articulation par le fait que la première partie de ferrure (12a) est raccordée de façon fixe au cadre de siège (10) tandis qu'un premier levier (13) est fixé sur la deuxième partie de ferrure (12b) et auquel la bielle (14) est raccordée de façon articulée au moyen d'une deuxième articulation (14a), en particulier est disposée de façon directement articulée ou bien avec un décalage axial par rapport au premier levier (13) en référence à l'axe de réglage d'inclinaison (N), la bielle (14) étant articulée sur le châssis en ciseaux (3) au moyen d'une troisième articulation (14b), et l'axe de réglage d'inclinaison (N) et les articulations (14a, 14b) de la bielle (14) définissant la triple articulation.

2. Siège de véhicule selon la revendication 1, **caractérisé en ce que**, sur le côté de siège de véhicule opposé à la ferrure de réglage d'inclinaison (12), il est prévu une première articulation (11) qui est en affleurement avec l'axe de réglage d'inclinaison (N).

3. Siège de véhicule selon la revendication 2, **caractérisé en ce que**, au moyen de la première articulation (11), un deuxième levier (13b) est articulé, auquel une autre bielle (14) est raccordée de façon articulée au moyen d'une autre deuxième articulation (14a), en particulier est disposée directement de façon articulée ou avec un décalage axial par rapport au deuxième levier (13b) en référence à l'axe de réglage d'inclinaison (N).

4. Siège de véhicule selon la revendication 3, **caractérisé en ce que**, entre la partie de ferrure (12b) de la ferrure de réglage d'inclinaison (12) ou le premier levier (13) sur un côté et le deuxième levier (13b) sur autre côté, il est prévu une traverse (40) qui est disposée parallèlement à l'axe de réglage d'inclinaison (N) ou qui est disposée en affleurement avec cet axe, et qui est de préférence raccordée de façon fixe aux composants cités (12b, 13, 13b) et qui est de préférence munie de la deuxième articulation (14a) décalée axialement.

5. Siège de véhicule selon une des revendications précédentes, **caractérisé en ce que** le dossier (20) est mis en place de façon pivotante, au moyen d'au moins une ferrure de dossier (22), sur le cadre de siège (10) ou sur le châssis en ciseaux (3) ou sur des adaptateurs de dossier (16) fixés sur le cadre de siège (10) ou sur le châssis en ciseaux (3).

6. Siège de véhicule selon une des revendications précédentes, **caractérisé en ce que** la ferrure de réglage d'inclinaison (12) et/ou la ferrure de dossier (22) forment, au point de vue constructif, une unité en forme de disque ou sont munies de pattes de fixation dépassant radialement et/ou **en ce que** la ferrure de réglage d'inclinaison (12) et/ou la ferrure de dossier (22) sont réalisées en tant que ferrure d'enclenchement ou en tant que ferrure de mécanisme, en particulier avec un mécanisme planétaire à excentrique autobloquant.

7. Siège de véhicule selon une des revendications précédentes, **caractérisé en ce que** le châssis en ciseaux présente un cadre inférieur (5), un cadre supérieur (7) placé au-dessus du précédent et au moins une paire de bras oscillants (8) croisés permettant de régler la hauteur du cadre supérieur (7) au-dessus du cadre inférieur (5).

8. Siège de véhicule selon une des revendications précédentes, **caractérisé en ce que** le châssis en ciseaux (3) présente un premier élément d'arrêt (31) et **en ce que** le cadre de siège (10) présente un deuxième élément d'arrêt (32) qui n'entretiennent normalement aucune interaction et qui, en cas de collision ou en cas de mauvais usage, se rapprochent l'un de l'autre en raison d'un couple qui agit sur le cadre de siège (10) au moyen du dossier (20) et qui coopèrent ensuite avec création d'un autre chemin pour le flux des forces.
